# EUROPÄISCHE PATENTANMELDUNG

(11) **EP 3 862 949 A1**
(43) Veröffentlichungstag der Anmeldung: **11.08.2021**
(21) Anmeldenummer: 20156396.2
(22) Anmeldetag: 10.02.2020
(51) Int. Cl.: G06Q 10/10

(54) **VERFAHREN ZUM WEITERLEITEN EINER ANFRAGE EINES CLIENTS AN EINEN SERVER**

(71) Anmelder: Siemens Aktiengesellschaft, 80333 München (DE)
(72) Erfinder: Fusenig, Volker, 54296 Trier (DE)

(57) **Zusammenfassung**

Verfahren zum Weiterleiten einer Anfrage eines Clients (10) zu einer Computer-implementierten Anwendung an einen Server (12) aus einer Mehrzahl von Servern (12, 13, 14), die die Anwendung bereitstellen, umfassend:
- Erstellen (21) einer Anforderungsnachricht (REQ, 31) zum Aufrufen der Anwendung durch den Client (10),
- Anfügen (22) einer Bedingungsdatenstruktur (B, 32), die mindestens eine Bedingung (B1,..,Bn) des Clients (10) an das Bereitstellen der Anwendung umfasst, an die Anforderungsnachricht (REQ, 31),
- Übermitteln (23) der mit der Bedingungsdatenstruktur ergänzten Anforderungsnachricht (REQ_B, 30) an eine Weiterleitungsvorrichtung (11),
- Ermitteln (24) des Servers (12) anhand einer Weiterleitungsregel (15) in Abhängigkeit von der mindestens einen Bedingung (B1,..,Bn) in der Bedingungsdatenstruktur (B, 32), und
- Weiterleiten (25) der Anforderungsnachricht (REQ, 31) an einen der ermittelten Server (12).

## Beschreibung

Die Erfindung betrifft ein Verfahren sowie einen Client und eine Weiterleitungsvorrichtung zum Weiterleiten einer Anfrage eines Clients zu einer Computer-implementierten Anwendung an einen Server aus einer Mehrzahl von Servern, die die Anwendung bereitstellen.

Computer-implementierte Anwendung wird ein Computerprogramm genannt, das eine für einen Anwender nützliche Funktion, die auch als Dienst bezeichnet wird, ausführt. Im Weiteren werden Computer-implementierte Anwendungen verkürzt als Anwendungen bezeichnet. Die Anwendung wird auf Anfrage des Anwenders, beispielsweise einem menschlichen oder einen "maschinellen" Nutzer mittels einer Client-Anwendung auf einem Gerät, kurz als Client bezeichnet, aufgerufen und durch eine Instanz des Anwendungsprogramms, das auf einem Server ausgeführt wird, bereitstellt. Die Anwendung wird häufig nicht nur auf einem, sondern auf einer Mehrzahl von Servern oder virtuellen Maschinen bereitgestellt. So kann eine Vielzahl von Anfragen parallel von mehreren Instanzen der Anwendung bedient werden.

Üblicherweise werden Lastverteilungsvorrichtungen, sogenannte Load-Balancer, eingesetzt, um die Anfragen auf die parallellaufenden Server oder virtuellen Maschinen zu verteilen. Dabei kann die Anwendung bzw. der die Anwendung bereitstellende Server über eine einzige gemeinsame Zieladresse angesprochen werden. Die verschiedenen virtuellen Maschinen bzw. unterschiedlichen Servern, auf denen Instanzen der Anwendung ausgeführt werden, können sich in unterschiedlichen geografischen Standorten befinden und in unterschiedlichen Sicherheitsstufen, beispielsweise als Teil eines Hochsicherheitsserversystems oder als Teil eines ungeschützt betriebenen Servers, ausgebildet sein. Häufig wird neben der betrachteten Anwendung der Server von weiteren unterschiedlichen Dienstanbietern genutzt, die eigene Anwendungsprogramme ebenfalls auf dem gleichen Server ausführen und bereitstellen lassen.

Aus Sicherheitssicht ist es häufig erwünscht, dass Anfragen nur durch bestimmte Instanzen einer Anwendung bzw. bestimmte Server, die diese Anwendung bereitstellen, ausgeführt werden. Beispielsweise sollen Daten, die mit einer bestimmten Anwendung verknüpft sind, eine geografische Region nicht verlassen oder nicht parallel mit den Daten anderer Kunden auf demselben Server verarbeitet werden.

Herkömmlicherweise würden dazu mehrere Instanzen derselben Anwendung beispielsweise auf unterschiedlichen Servern bereitgestellt werden und direkt als Ziel einer Anfrage adressiert werden. Dies hat den Nachteil, dass einzelne Instanzen der Anwendung und somit auch ein die Anwendung bereitstellender Server weniger ausgelastet ist. Andererseits sind mehr Lastverteilervorrichtungen notwendig, da eine größere Anzahl von Einzelzielen und damit Adressen ausgewertet und bearbeitet werden müssen.

Des Weiteren ist ein richtlinienbasiertes Routing, auch Policy Based Routing bezeichnet, bekannt, bei dem eine Weiterleitung von Datenpaketen nicht nur anhand von Metriken, wie beispielsweise einer niedrigsten Übertragungsverzögerung bzw. einer höchsten Bandbreite bestimmt werde, sondern durch Richtlinien, sogenannte Policies, beeinflusst werden kann. Bei einem policybasierten Routing werden weitere Kriterien für die Auswahl der nächsten Übertragungsstrecke in Betracht gezogen, beispielsweise die Quelladresse, die Paketgröße, das Protokoll oder beliebige andere Metadaten der Verbindung bzw. des Datenpaketes. Dadurch kann ein differenzierteres Routing vorgenommen werden, bei dem auch eine unterschiedliche Behandlung von Datenpaketen mit identischer Zieladresse möglich ist. Nachteilig ist dabei, dass der Administrationsaufwand für ein solches Routing zunimmt. Des Weiteren zielt eine solche Lösung auf Netzbetreiber ab und erfordert ein entsprechendes Routing-Protokoll, das von den Routern im Datennetz verarbeitet werden muss.

Es ist somit die Aufgabe der vorliegenden Erfindung, eine ressourcenschonende, einfache und allgemein einsetzbare Möglichkeit zu schaffen, Randbedingungen bzw. Vorgaben bezüglich der Bereitstellung des Anwendungsprogramms bzw. der die Anwendung bereitstellenden Server vorzugeben und durchzusetzen.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Verfahren zum Weiterleiten einer Anfrage eines Clients zu einer computer-implementierten Anwendung an einen Server aus einer Mehrzahl von Servern, die die Anwendung bereitstellen, umfassend die Verfahrensschritte:
Erstellen einer Anforderungsnachricht zum Abrufen der Anwendung durch den Client,
Anfügen einer Bedienungsdatenstruktur, die mindestens eine Bedingung des Clients an das Bereitstellen der Anwendung umfasst, an die Anforderungsnachricht,
Übermitteln der mit der Bedingungsdatenstruktur ergänzten Anforderungsnachricht an eine Weiterleitungsvorrichtung, Ermitteln des Servers anhand einer Weiterleitungsregel in Abhängigkeit von der mindestens eine Bedingung in der Bedingungsdatenstruktur, und
Weiterleiten der Anforderungsnachricht an einen der ermittelten Server.

Mit dem vorgeschlagenen Verfahren können Anfragen abhängig von verschiedenen Kriterien, die als Bedingung in der Bedingungsdatenstruktur enthalten sind, auf verschiedene Instanzen der Anwendung verteilt bzw. weitergeleitet werden. Ein Anpassen von Routing-Protokollen, wie beispielsweise bei einem policybasierten Routing, sind dabei nicht notwendig. Die Anwendung kann weiterhin über eine einzige, Anwendungs-spezifische Adresse geroutet werden.

In einer vorteilhaften Ausführungsform gibt die mindestens eine Bedingung einen geografischen Bereich des Standortes des Servers, der die Anwendung bereitstellt, an.

Dies hat den Vorteil, dass eine geografische Region vorgegeben und als Standort für den Server, der die angeforderte Anwendung bereitstellt, durchgesetzt werden kann.

In einer vorteilhaften Ausführungsform gibt die mindestens eine Bedingung eine Mindest-Sicherheitsstufe eines Servers, der die Anwendung bereitstellt, an.

Somit können unterschiedliche Sicherheitsanforderungen der Nutzer bzw. des Clients in Bezug auf die Anwendung durchgesetzt werden.

In einer vorteilhaften Ausführungsform bezieht sich die mindestens eine Bedingung auf Mitnutzer des Servers, der die Anwendung bereitstellt.

Somit kann durchgesetzt werden, dass beispielsweise ein Server ausgewählt wird, auf dem lediglich die durch die Bedingung genannten weiteren Nutzer den Server, der die Anwendung bereitstellt, mitnutzen. Die Bedingung kann auch einen Ausschluss bestimmter Nutzer und somit ein Art Positivliste oder einen Ausschluss bestimmter anderer Nutzer und somit eine Negativliste ausgebildet sein. Dazu müssen jedoch auch Server existieren, die den Bedingungen der Bedingungsdatenstruktur bezüglich der Nutzer erfüllen.

In einer vorteilhaften Ausführungsform gibt die mindestens eine Bedingung eine zeitliche Vorgabe der Bereitstellung der Anwendung an.

Damit können beispielsweise eine maximale Latenzzeit oder ein Echtzeitverhalten für die Bereitstellung der Anwendung festgelegt und ein Server bzw. eine Übertragungsverbindung zu einem entsprechenden Server gewählt werden, der bzw. die diese Vorgaben bzw. Bedingungen erfüllt.

In einer vorteilhaften Ausführungsform weist die Weiterleitungsregel eine Information zumindest einem aus dem geografischen Standort, der Sicherheitsstufe, dem Mitnutzer und der zeitlichen Angabe der Bereitstellung der Anwendung in dem mindestens einen Server auf.

Somit ist eine Weiterleitungsregel definiert, die Informationen zu den möglichen angegebenen Bedingungen in der Bedingungsdatenstruktur enthält und somit substanziell und objektiv den Server auswählen kann, der die genannten Bedingungen erfüllt.

In einer vorteilhaften Ausführungsform wird die mindestens eine Bedingungsdatenstruktur kryptographisch geschützt vom Client an die Weiterleitungsvorrichtung übermittelt.

Somit können insbesondere sicherheitsrelevante Bedingungen in der Bedingungsdatenstruktur vor einer unerlaubten Manipulation geschützt werden. Die Integrität und Authentizität sowie die Autorisierung der Anfrage kann beispielsweise durch eine Signatur der Bedingungsdatenstruktur oder auch der gesamten um die Bedingungsdatenstruktur ergänzte Anforderungsnachricht realisiert werden.

In einer vorteilhaften Ausführungsform wird die Bedingungsdatenstruktur als Teil eines Anwendungsprotokolls zwischen Client und der Weiterleitungsvorrichtung vom Client an die Anforderungsnachricht angefügt und von der Weiterleitungsvorrichtung ausgewertet.

Durch die Nutzung eines Anwendungsprotokolls zur Umsetzung der Bedingungsdatenstruktur kann die Auswertung der Bedingungsdatenstruktur funktional vom Routing und somit auch von der Lastverteilung der Anfragenachrichten getrennt durchgeführt werden. Insbesondere kann das Ergebnis der Auswertung der Bedingungsdatenstruktur im Anwendungsprotokoll zeitlich vor der Lastverteilung der Nachrichten beispielsweise auf Übertragungsebene ermittelt werden. Das Ergebnis dieser Auswertung der Bedingungsdatenstruktur kann somit als Eingabeparameter in einer Lastverteilungsfunktion berücksichtigt werden.

Ein zweiter Aspekt der Erfindung betrifft einen Client, umfassend eine Steuerungseinheit, die derart ausgebildet ist, eine Anforderungsnachricht zum Aufrufen einer computer-implementierten Anwendung zu erstellen und eine Bedingungsdatenstruktur, die mindestens eine Bedingung des Clients an das Bereitstellen der Anwendung umfasst, an die Anforderungsnachricht anzufügen und
eine Sendeeinheit, die derart ausgebildet ist, die mit der Bedingungsdatenstruktur ergänzte Anforderungsnachricht zu übermitteln.

Der Client ist als ein Client-Anwendungsprogramm auf einem Gerät ausgebildet und einem menschlichen Nutzer oder auch einem "maschinellen" Nutzer, beispielsweise einem Internet-der-Dinge-Gate zugeordnet. Der Client kann somit Anforderungen bzw. Bedingungen bezüglich des Servers, der die angefragte Anwendung bereitstellt, formulieren. Somit können Bedingungen, die beispielsweise die Sicherheit der Bereitstellung der Anwendung betrifft oder auch Performanceanforderungen bezüglich der Bereitstellung der Anwendung angibt, eingefordert werden.

In einer vorteilhaften Ausführungsform ist die Sendeeinheit derart ausgebildet, mindestens die Bedingungsdatenstruktur kryptographisch geschützt vom Client an die Weiterleitungsvorrichtung zu übermitteln.
Die Sendeinheit kann dazu eine kryptographische Funktion aufweisen, die die Bedingungsdatenstruktur alleine oder auch zusammen mit der Anforderungsnachricht verschlüsselt, signiert oder auf sonstige Weise kryptographisch schützt.

Ein dritter Aspekt der Erfindung betrifft eine Weiterleitungsvorrichtung, umfassend
eine Empfangseinheit, die derart ausgebildet ist, eine mit einer Bedingungsdatenstruktur ergänzten Anforderungsnachricht zu empfangen,
eine Ermittlungseinheit, die derart ausgebildet ist, mindestens einen Server anhand einer Weiterleitungsregel in Abhängigkeit von mindestens einer Bedingung in der Bedingungsdatenstruktur zu ermitteln und
eine Ausgabeeinheit, die derart ausgebildet ist, die Anforderungsnachricht an einen der ermittelten Server weiterzuleiten.

Mithilfe der Weiterleitungsvorrichtung können Anforderungsnachrichten, die mit einer Bedingungsdatenstruktur ergänzt sind, ausgewertet werden und entsprechend der genannten Bedingung ein oder mehrere Server anhand der Weiterleitungsregel ermittelt werden. Somit kann eine einzige Weiterleitungsvorrichtung anhand der Anforderungsnachricht bzw. der Bedingungsdatenstruktur ermitteln, welcher Server die in der Bedingungsdatenstruktur genannten Bedingungen erfüllt. Es sind dazu keine weiteren Lastverteilungsvorrichtungen erforderlich. Auch kann die Anwendung durch eine einzige Zieladresse adressiert werden und der mindestens einen Server abhängig von den genannten Bedingungen ausgewählt, adressiert und zur Bearbeitung der Anforderungsnachricht genutzt werden.

In einer vorteilhaften Ausführungsform umfasst die Weiterleitungsvorrichtung eine Lastverteilungseinheit, die derart ausgebildet ist, die Anforderungsnachricht abhängig von einer Lastverteilungsregel an einen der ermittelten Server weiterzuleiten.
Somit umfasst die Weiterleitungsvorrichtung eine Lastverteilerfunktion, die aus den von der Ermittlungseinheit ermittelten Anzahl von Servern abhängig von den Lastverteilungsregeln auf Transportebene den günstigsten Server ermittelt und die Anforderungsnachricht an diesen Server weiterleitet. Eine solche Weiterleitungsvorrichtung umfasst somit einen integrierten Lastverteiler.

Ein weiterer Aspekt der Erfindung betrifft ein Computerprogrammprodukt, umfassend ein nicht flüchtiges, computerlesbares Medium, das direkt in einen Speicher eines digitalen Computers ladbar ist, umfassend Programmcodeteile, die dazu geeignet sind, die Schritte des beschriebenen Verfahrens durchzuführen.

Sofern nichts anderes angegeben ist, beziehen sich die Begriffe "Erstellen", "Anfügen", "Übermitteln", "Weiterleiten" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden und vorliegen können, beispielsweise als elektrische Impulse. Insbesondere sollte der Ausdruck "Client, Weiterleitungsvorrichtung" möglichst breit ausgelegt werden, um insbesondere elektronische Geräte mit Datenverarbeitungseigenschaften abzudecken. Der Client und die Weiterleitungsvorrichtung umfassen mindestens einen Prozessor, der die genannten Einheiten hardwaretechnisch oder auch softwaretechnisch ausbildet. Unter einem Prozessor kann im Zusammenhang mit der Erfindung beispielsweise eine elektronische Schaltung verstanden werden, beispielsweise ein Hauptprozessor, ein Mikroprozessor oder Mikrocontroller oder auch anwendungsspezifisch integrierte Schaltungen oder ein digitaler Signalprozessor, möglicherweise in Kombination mit einer Speichereinheit zum Speichern von Programmbefehlen.

Ausführungsbeispiele des erfindungsgemäßen Verfahrens, Clients und die erfindungsgemäßen Weiterleitungsvorrichtungen sind in den Zeichnungen beispielhaft dargestellt und werden anhand der nachfolgenden Beschreibung näher erläutert. Es zeigen:
- Fig. 1: ein Anwendungsszenario des erfindungsgemäßen Verfahrens in schematischer Darstellung;
- Fig. 2: ein Ausführungsbeispiel des erfindungsgemäßen Verfahrens als Flussdiagramm;
- Fig. 3: ein Ausführungsbeispiel einer mit der erfindungsgemäßen Bedingungsdatenstruktur erweiterte Anforderungsnachricht in schematischer Darstellung,
- Fig. 4: ein Ausführungsbeispiel des erfindungsgemäßen Clients in Blockdarstellung; und
- Fig. 5: ein Ausführungsbeispiel der erfindungsgemäßen Weiterleitungsvorrichtung in Blockdarstellung.

Einander entsprechende Teile sind in allen Figuren mit den gleichen Bezugszeichen versehen.

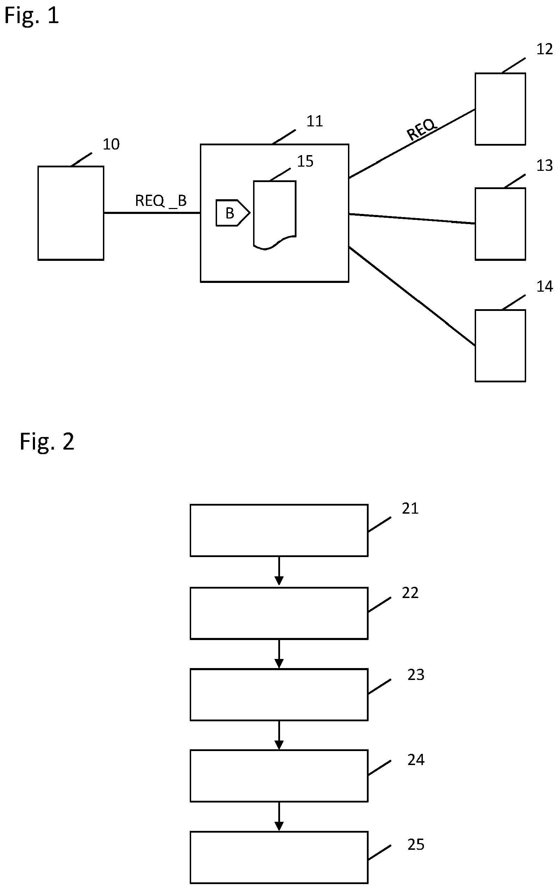

Das Anwendungsbeispiel in Figur 1 zeigt einen Client 10, eine Weiterleitungsvorrichtung 11 sowie mehrere Server 12, 13, 14, die jeweils eine bestimmte Anwendung bereitstellen. Der Client 10 kann beispielsweise ein elektronisches Gerät oder Computer sein, das von einem menschlichen Nutzer oder einer elektronischen Funktion dazu verwendet wird, eine computer-implementierte Anwendung, also ein Anwendungsprogramm, das einen bestimmten Dienst bereitstellt, anzufordern. Jeder der Server 12, 13 und 14 umfasst mindestens eine Instanz der Anwendung, das heißt des Anwendungsprogramms, das den angeforderten Dienst bereitstellt.

Die Server 12, 13 und 14 können dabei an unterschiedlichen geografischen Standorten angeordnet sein und unterschiedliche Sicherheitseigenschaften umfassen. So kann beispielsweise Server 12 Anwendungsdaten verschlüsselt speichern oder auch eine verschlüsselte Datenübertragung zum Client unterstützen. Der Server 12 kann von einem Betreiber A bereitgestellt werden und Anwendungen von verschiedenen Mitnutzern K1, K2 und K3 des Betreibers A bereitstellen. Der Server 12 ist des Weiteren in einem geografischen Bereich G1, beispielsweise in Europa, angeordnet. Der Server 13 kann lediglich unverschlüsselte Datenverbindungen unterstützen oder lediglich Daten unverschlüsselt speichern. Der Server 13 wird von einem Betreiber B betrieben, stellt Anwendung für lediglich den Nutzer K0 bereit und ist in einem geografischen Bereich G2, beispielsweise in den USA, angeordnet. Server 14 weist in gleicher Weise Eigenschaften bezüglich des geografischen Standortes, eine Sicherheitsstufe und der Nutzer auf, ist jedoch mit einer Übertragungsverbindung mit hoher Bandbreite angebunden.

Der Client 10 ist dabei erfindungsgemäß derart ausgebildet, neben der Anforderungsnachricht eine Bedingungsdatenstruktur B der Anforderungsnachricht REQ anzufügen, die Bedingungen beispielsweise bezüglich Sicherheitsanforderungen an den Server oder an die Art der Bereitstellung der Anwendung anzugeben. Eine solche durch die Bedingungsdatenstruktur B ergänzte Anforderungsnachricht ist in Fig. 1 unter der Bezeichnung REQ_B dargestellt.

Die Weiterleitungsvorrichtung 11 wertet die Bedingungsdatenstruktur B aus und ermittelt anhand einer Weiterleitungsregel 15 einen oder mehrere Server, die die Bedingungen aus der Bedingungsdatenstruktur erfüllen. Im dargestellten Beispiel wird Server 12 ermittelt. Die Anforderungsnachricht REQ wird an den ermittelten Server 12 weitergeleitet.

In Figur 2 sind die einzelnen Schritte des Verfahrens dargestellt. Im ersten Verfahrensschritt 21 wird eine Anforderungsnachricht REQ zum Aufrufen der Anwendung durch den Client 10 erstellt. Im anschließenden Verfahrensschritt 22 wird eine Bedingungsdatenstruktur B, die mindestens eine Bedingung des Clients umfasst, an die Anforderungsnachricht angefügt. Die Bedingungsdatenstruktur B kann dabei eine oder auch mehrere unterschiedliche Bedingungen B1, ..., Bn umfassen. Die Bedingungen B1, ..., Bn können im Client 10 vordefiniert vorliegen oder auch von einem Nutzer des Clients 10 bei jeder Anfrage an eine computer-implementierte Anwendung eingegeben und in die Bedingungsdatenstruktur B eingefügt werden.

Somit können sehr flexibel und sehr vielseitig Kriterien oder Randbedingungen zur Erbringung der Anwendung definiert werden. Eine Bedingung B1, ..., Bn kann beispielsweise ein geografischer Bereich des Standorts des Servers, eine Mindestsicherheitsstufe des Servers 12, 13, 14, kryptographische Funktionen, z.B. Verschlüsselungsfähigkeiten, des Servers 12, 13, 14 oder auch Bedingungen bezüglich einer zeitlichen Dauer zur Bereitstellung der Anwendung sein. Optional kann die Bedingungsdatenstruktur B kryptographisch geschützt, beispielsweise durch Bilden und Anhängen einer digitalen Signatur, sein.

Anschließend wird die mit der Bedingungsdatenstruktur B ergänzte Anforderungsnachricht an die Weiterleitungsvorrichtung 11 übermittelt, siehe Schritt 23. Dort wird anhand der Weiterleitungsregel 15 abhängig von der mindestens einen Bedingung B1, ..., Bn in der Bedingungsdatenstruktur B der Server ermittelt, der die Bedingungen B1, ..., Bn erfüllt, siehe Schritt 24. Kann kein Server 12, 13, 14 die eine oder mehrere Bedingungen B1, ..., Bn erfüllen, so wird beispielsweise eine Fehlernachricht an den Client 10 übermittelt. Ergeben sich aus den Weiterleitungsregeln 15 ein oder mehrere Server 12, 13, 14, die alle genannten Bedingungen B1, ..., Bn erfüllen, so wird die Anforderungsnachricht REQ an einen der ermittelten Server weitergeleitet, siehe Schritt 25.

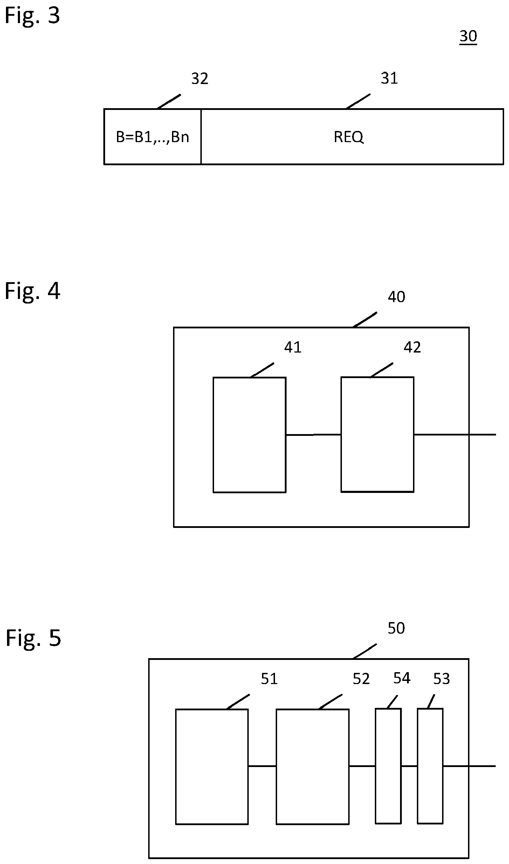

Figur 3 zeigt nun eine um eine Bedingungsdatenstruktur B erweiterte Anforderungsnachricht 30. Diese umfasst die Anforderungsnachricht REQ, die in einem ersten Bereich 31 sowie eine Bedingungsdatenstruktur B mit Bedingungen B1, ..., Bn in einem Bereich 32. Die Bedingungen B1, ..., Bn bzw. die Bedingungsdatenstruktur B können auf Anwendungsebene im Rahmen eines Anwendungsprotokolls ausgewertet werden. Der Client 10 kann beispielsweise die Anforderungsnachricht REQ, 31 als Nutzdaten und die Bedingungsdatenstruktur B in den Nachrichtenkopf in eine dem https-Protokoll (sicheres Hypertext-Übertragungsprotokoll) entsprechende Protokollnachricht kodieren. Andere Möglichkeiten zur Übertragung und Auswertung der Bedingungsdatenstruktur sind auch denkbar. Beispielsweise kann mindestens ein Flag in bestehenden Protokollen eingefügt bzw. diese Protokolle erweitert werden oder ein eigenes Protokoll unterhalb der Anwendungsschicht entworfen werden. Ebenso ist es möglich die mindestens eine Bedingung implizit abzuleiten, beispielsweise indem Anfragen bzw. Anforderungsnachrichten aus einem bestimmten IP Bereich auf einen speziell gesicherten Server weitergeleitet werden.

Figur 4 zeigt ein erfindungsgemäßes Gerät 40, mit einer Steuerungseinheit 41 sowie einer Sendeeinheit 42. Das Gerät 40 umfasst einen oder mehrere Prozessoren, auf denen die Steuerungseinheit 41 bzw. die Sendeinheit 42 ausgebildet sind. Die Steuerungseinheit 41 ist dabei derart ausgebildet, die Anforderungsnachricht REQ, 31 zum Aufrufen der computer-implementierten Anwendung zu erstellen und eine Bedingungsdatenstruktur B, 32, die mindestens eine Bedingung mindestens einen Bedingung B1, ..., Bn des Clients 10 an das Bereitstellen der Anwendung umfasst, an die Anforderungsnachricht REQ, 31 anfügt. Die somit um die Bedingungsdatenstruktur B, 32 ergänzte Anforderungsnachricht REQ_B, 30 wird an die Sendeeinheit 42 übergeben und von dieser ausgegeben. Optional umfasst die Sendeeinheit 42 eine kryptographische Funktion, die die Bedingungsdatenstruktur B, 32 oder die um die Bedingungsdatenstruktur B, 32 ergänzte Anforderungsnachricht REQ_B, 30 kryptographisch schützt.

Figur 5 zeigt eine Weiterleitungsvorrichtung 50. Diese umfasst eine Empfangseinheit 51, eine Ermittlungseinheit 52, eine Ausgabeeinheit 53 sowie optional eine Lastverteilungseinheit 54. Die Empfangseinheit 51 ist derart ausgebildet, eine mit der Bedingungsdatenstruktur ergänzte Anforderungsnachricht REQ_B, 30 zu empfangen. Die Ermittlungseinheit 52 ist derart ausgebildet, mindestens einen Server 12, 13, 14 anhand einer Weiterleitungsregel 15 in Abhängigkeit von den in der Bedingungsdatenstruktur B, 32 enthaltenen Bedingungen B1, ..., Bn zu ermitteln.

Die Weiterleitungsregel 15 kann beispielsweise in Form einer oder mehrerer Tabellen in der Weiterleitungsvorrichtung 50 beispielsweise in der Ermittlungseinheit 52 gespeichert sein. Die Weiterleitungsregel 15 kann optional von der Ermittlungseinheit 52 aktualisiert werden, indem eine Abfrage bei einem zentralen Knoten durchgeführt und bei Vorliegen einer aktualisierten Fassung diese aktualisierte Weiterleitungsregel empfangen und aktualisiert wird.

Wird die Bedingungsdatenstruktur REQ_B, 30 als Teil eines Anwendungsprotokolls vom Client 10, 40 empfangen, so wird dieses Anwendungsprotokoll in der Weiterleitungsvorrichtung 50, insbesondere in der Empfangseinheit 51 oder in der Ermittlungseinheit 52 terminiert und die Bedingungsdatenstruktur ausgewertet. Anschließend wird der eine oder auch die mehreren ermittelten Server der Ausgabeeinheit 53 mitgeteilt und die Anforderungsnachricht REQ, 31 an einen dieser ermittelten Server weitergeleitet. Optional kann die Anforderungsnachricht REQ, 31 sowie die Information über die ermittelten Server an eine externe Lastverteilungsvorrichtung übermittelt werden, die die Anforderungsnachricht REQ, 31 an denjenigen Server aus der Anzahl der ermittelten Server weiterleitet, der anhand einer Routingregel ermittelt wurde.
Eine solche Lastverteilungsfunktion kann auch als integrierte Einheit, hier die Lastverteilungseinheit 54, mit der Weiterleitungsvorrichtung 50 kombiniert sein.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zum Weiterleiten einer Anfrage eines Clients (10) zu einer Computer-implementierten Anwendung an einen Server (12) aus einer Mehrzahl von Servern (12, 13, 14), die die Anwendung bereitstellen, umfassend:
- Erstellen (21) einer Anforderungsnachricht (REQ, 31) zum Aufrufen der Anwendung durch den Client (10),
- Anfügen (22) einer Bedingungsdatenstruktur (B, 32), die mindestens eine Bedingung (B1,..,Bn) des Clients (10) an das Bereitstellen der Anwendung umfasst, an die Anforderungsnachricht (REQ, 31),
- Übermitteln (23) der mit der Bedingungsdatenstruktur ergänzten Anforderungsnachricht (REQ_B, 30) an eine Weiterleitungsvorrichtung (11),
- Ermitteln (24) des Servers (12) anhand einer Weiterleitungsregel (15) in Abhängigkeit von der mindestens einen Bedingung (B1,..,Bn) in der Bedingungsdatenstruktur (B, 32), und
- Weiterleiten (25) der Anforderungsnachricht (REQ, 31) an einen der ermittelten Server (12).

2. Verfahren nach Anspruch 1, wobei die mindestens eine Bedingung (B1,..,Bn) einen geografischen Bereich des Standortes des Servers(12, 13, 14), der die Anwendung bereitstellt, angibt.

3. Verfahren nach einem der vorherigen Ansprüche, wobei die mindestens eine Bedingung (B1,..,Bn) eine Mindest-Sicherheitsstufe des Servers (12, 13, 14), der die Anwendung bereitstellt, angibt.

4. Verfahren nach einem der vorherigen Ansprüche, wobei die mindestens eine Bedingung (B1,..,Bn) sich auf Mitnutzer des Servers (12, 13, 14)), der die Anwendung bereitstellt, bezieht.

5. Verfahren nach einem der vorherigen Ansprüche, wobei die mindestens eine Bedingung (B1,..,Bn) eine zeitliche Vorgabe der Bereitstellung der Anwendung angibt.

6. Verfahren nach einem der vorherigen Ansprüche, wobei die Weiterleitungsregel (15) eine Information zu mindestens einem aus dem geografischen Standort, der Sicherheitsstufe, dem Mitnutzer und der zeitlichen Angaben der Bereitstellung der Anwendung in dem mindestens einen Server (12, 13, 14) aufweist.

7. Verfahren nach einem der vorherigen Ansprüche, wobei mindestens die Bedingungsdatenstruktur (B, 32) kryptographisch geschützt vom Client (10) an die Weiterleitungsvorrichtung (11) übermittelt wird.

8. Verfahren nach einem der vorherigen Ansprüche, wobei die Bedingungsdatenstruktur (B, 32) als Teil eines Anwendungsprotokolls zwischen Client (10) und der Weiterleitungsvorrichtung (11) vom Client (10) an die Anforderungsnachricht (REQ, 31) angefügt wird und von der Weiterleitungsvorrichtung (11) ausgewertet wird.

9. Client (40), umfassend
eine Steuerungseinheit (41), die der derart ausgebildet ist, eine Anforderungsnachricht (REQ, 31) zum Aufrufen einer computer-implementierten Anwendung zu erstellen und
eine Bedingungsdatenstruktur (B, 32), die mindestens eine Bedingung (B1,..,Bn) des Clients (10) an das Bereitstellen der Anwendung umfasst, an die Anforderungsnachricht (REQ, 30) anzufügen, und
eine Sendeeinheit (42), die derart ausgebildet ist, die mit der Bedingungsdatenstruktur ergänzte Anforderungsnachricht (REQ_B, 30) zu übermitteln.

10. Client nach Anspruch 9, wobei die Sendeeinheit (42) derart ausgebildet ist, mindestens die Bedingungsdatenstruktur (B, 32) kryptographisch geschützt vom Client (10) an die Weiterleitungsvorrichtung (11) zu übermitteln.

11. Weiterleitungsvorrichtung (50), umfassend
- eine Empfangseinheit (51), die derart ausgebildet ist, eine mit einer Bedingungsdatenstruktur (B, 32) ergänzten Anforderungsnachricht (REQ_B, 30) zu empfangen,
- eine Ermittlungseinheit (52), die derart ausgebildet ist, mindestens einen Server (12, 13, 14) anhand einer Weiterleitungsregel (15) in Abhängigkeit von mindestens einer Bedingung (B1,..,Bn) in der Bedingungsdatenstruktur (B, 32) zu ermitteln, und
- eine Ausgabeeinheit (53), die derart ausgebildet ist, die Anforderungsnachricht (REQ, 31) an einen der ermittelten Server (12) weiterzuleiten.

12. Weiterleitungsvorrichtung nach Anspruch 11, umfassend eine Lastverteilungseinheit (54), die derart ausgebildet ist, die Anforderungsnachricht (REQ, 31) abhängig von einer Lastverteilungsregel an einen der ermittelten Server (12) weiterzuleiten.

13. Computerprogrammprodukt, umfassend ein nicht flüchtiges Computerlesbares Medium, das direkt in einen Speicher eines digitalen Computers ladbar ist, umfassend Programmcodeteile, die dazu geeignet sind, die Schritte des Verfahrens nach einem der Ansprüche 1 bis 8 durchzuführen.
